(19) Europäisches Patentamt

European Patent Office

Office européen des brevets

(11) **EP 1 134 023 A1**

(12) **EUROPEAN PATENT APPLICATION**
published in accordance with Art. 158(3) EPC

(43) Date of publication:
**19.09.2001 Bulletin 2001/38**

(51) Int Cl.7: **B01J 20/20**, C01B 31/08,
F17C 11/00

(21) Application number: **98937840.1**

(22) Date of filing: **14.08.1998**

(86) International application number:
**PCT/JP98/03644**

(87) International publication number:
**WO 00/09257 (24.02.2000 Gazette 2000/08)**

(84) Designated Contracting States:
**DE FR GB**

(71) Applicant: **Takachiho Chemical Industrial Co.,
Ltd.
Tokyo 150-0012 (JP)**

(72) Inventors:
- **NAKANOYA, Tsutomu,
Takachiho Chem. Ind. Co., Ltd.
Machida-shi, Tokyo 194-0004 (JP)**
- **SHIBUSAWA, Yuji,
Takachiho Chem. Ind. Co., Ltd.
Machida-shi, Tokyo 194-0004 (JP)**

- **HASUMI, Kazuhiro,
Takachiho Chem. Ind. Co., Ltd.
Machida-shi, Tokyo 194-0004 (JP)**
- **ISHIMORI, Koji, Takachiho Chem. Ind. Co., Ltd.
Machida-shi, Tokyo 194-0004 (JP)**
- **IBARAKI, Satoshi
Osaka-shi, Osaka 552-0004 (JP)**
- **TAKAUCHI, Akira
Osaka-shi, Osaka 534-0016 (JP)**

(74) Representative: **Glawe, Delfs, Moll & Partner
Patentanwälte
Postfach 26 01 62
80058 München (DE)**

(54) **METHOD AND APPARATUS FOR STORING AND FEEDING GASEOUS COMPOUND**

(57) The present invention is directed to a method of and an apparatus for adsorbing a gaseous hydrogenated compound or a gaseous halogenated compound to high-purity activated carbon under a storage environment at a pressure which is not more than atmospheric pressure and storing the adsorbed gaseous compound upon bringing the gaseous compound into contact with the activated carbon, and desorbing at least a part of the adsorbed gaseous compound and delivering the part to a work environment, wherein the activated carbon is treated by a series of steps comprising a step of adsorbing the gaseous hydrogenated compound or the gaseous halogenated compound upon bringing the gaseous compound into contact with the activated carbon in advance in a sealed space, a step of accelerating a reaction of a system passing through the adsorbing step, and a step of expelling the gaseous compound passing through the reaction accelerating step from the sealed space.

F i g 1

**Description**

Technical Field

The present invention relates to a method of and an apparatus for storing and delivering a gaseous hydrogenated compound or a gaseous halogenated compound, such as arsine, phosphine, or boron trifluoride, used as an ion implantation gas in the semiconductor industry, for example. More specifically, it relates to a method of and an apparatus for storing and feeding a gaseous compound, that are excellent in adsorbing and storing the gaseous compound in a considerable amount stably and safely for a long time period with a high purity, preventing the gaseous compound from being released to atmosphere, and safely delivering the gaseous compound.

Background Art

Conventionally in the semiconductor industry, for example, gaseous compounds that are extremely toxic to the human body, such as arsine ($ASH_3$), phosphine ($PH_3$), and boron trifluoride ($BF_3$), have been widely used as ion implantation gases in an ion implantation process in fabricating semiconductors. As a typical example, arsine is preserved in a cylinder or a bomb in the state of pure arsine or the state of a mixture of arsine and a balance gas such as hydrogen or helium and is fed outward from the cylinder or the bomb for commercial applications.

When arsine is thus preserved in the cylinder or the bomb, it may leak out of the cylinder or the bomb. Particularly, arsine is liable to leak during delivery and shipment of the cylinder or the bomb, which is highly dangerous.

In order to solve such a problem, a method of adsorbing arsine to zeolite that is a porous crystalline alumina silicate and storing the adsorbed arsine under negative pressure is disclosed in U.S.Patent No. 474421 issued on May 17, 1988, for example. According to this method, arsine, which has been adsorbed to zeolite once under negative pressure, is desorbed from zeolite by a reversible reaction and is stored under negative pressure. When toxic arsine is delivered to a necessary location, therefore, it can be prevented from being diffused into atmosphere.

If zeolite is used, however, arsine decomposes into arsenic and hydrogen at room temperature. Accordingly, the concentration of pure arsine, which can be extracted, is decreased, and with the elapse of time, the pressure inside the bomb is raised due to the generated hydrogen. The pressure inside the bomb may, in some cases, be not less than atmospheric pressure, resulting in danger that arsine leaks outward.

In order to avoid the danger, PCT WO96/11739 discloses that the use of activated carbon containing few impurities is suitable in storing a gaseous compound, such as arsine, phosphine, or boron trifluoride, used as an ion implantation gas in the semiconductor industry. Since a raw material for general activated carbon is a natural substance, such as coconut shell or coal, however, when pores are formed in an activating step, which is one of steps of producing the activated carbon, the pore diameter distribution is broadened due to the influence of impurities existing in the raw material, and nonuniformity in the composition and the structure of the raw material, which is not suitable for adsorption and storage of a particular gaseous compound at high efficiency. Furthermore, there is a difference between lots of the raw material due to the production region, the production season, and the like, so that it is difficult to strictly control the pore diameter distribution.

Unless particles of activated carbon packed in the bomb have a sufficiently high strength, there arise some problems. For example, the activated carbon particles rub against each other or against the wall surface of the bomb due to variations in pressure occurring at the time of movement of the bomb and at the time of adsorption and desorption of the gaseous compound, thereby degrading the activated carbon. Accordingly, carbon fine powder is produced in the bomb. In taking the gaseous compound out of the bomb, a gas filter through which the gaseous compound is passed is clogged with the carbon fine powder.

Various types of metals exist as impurities in the activated carbon derived from the natural substance. When the activated carbon is used for adsorption and storage of arsine, phosphine, or the like with the metals contained, however, the adsorbed gaseous compound decomposes, as in the above-mentioned case where zeolite is used, for example, arsine decomposes into arsenic and hydrogen, as indicated by the following expression:

$$AsH_3 \rightarrow As + 3/2H_2$$

Correspondingly, the concentration of pure arsine, which can be extracted, is decreased, and the pressure inside the bomb is raised due to the generated hydrogen with the elapse of time. The pressure inside the bomb may, in some cases, be changed from an initial negative pressure to a pressure which is not less than atmospheric pressure, resulting in danger that an extremely toxic gas such as arsine leaks outward.

In order to increase the purity of activated carbon, therefore, the activated carbon is washed with an acid such as hydrochloric acid, nitric acid, phosphoric acid, or sulfuric acid. When the activated carbon is washed with the acid, however, an anion in the acid used for washing may, in some cases, remain in the activated carbon. When such activated carbon is used for adsorption and storage of arsine, phosphine, or the like, nitrogen gas, oxygen gas, or the like is generated due to reduction of the anion, resulting in danger that the purity of the stored gas is decreased, and arsine, for example, leaks outward by the rise in the pressure inside the bomb, as in the above-mentioned case.

In a case where high-purity activated carbon produced using a high-purity raw material is used, the problem that arsine decomposes into arsenic and hydrogen, for example, is avoided. However, the high-purity activated carbon and a gaseous compound such as arsine react with each other, to generate impurities such as hydrogen, nitrogen, carbon monoxide and carbon dioxide. The impurity gas generated in this case differs from hydrogen gas generated by the above-mentioned self-decomposition of arsine or the like in that the gas pressure in a storage container does not generally reach not less than atmospheric pressure. Consequently, there is little danger that arsine or the like leaks outward. When a gaseous compound such as arsine, phosphine, or boron trifluoride is used in an ion implantation process in the semiconductor industry, for example, however, the purity of the gaseous compound must be not less than 99.9 % according to the SEMI International Standards (1990). When the impurity gases are generated, as described above, therefore, the purity of the gaseous compound is decreased, thereby significantly degrading the value of the gaseous compound.

In a case where a particular gaseous hydrogenated compound or gaseous halogenated compound, such as arsine, phosphine, or boron trifluoride, is stored upon being adsorbed to activated carbon under the temperature of a normal work environment, when it is sucked in, desorbed and delivered using a vacuum pump while controlling the flow rate of the gaseous compound, the gaseous compound finally remains to some extent in the container, which depends on the flow rate of the gaseous compound and the performance of the vacuum pump, so that the amount of the gaseous compound which can be effectively utilized is decreased.

An object of the present invention is to solve the above-mentioned various problems, and to provide a method of and an apparatus for efficiently adsorbing a gaseous hydrogenated compound or a gaseous halogenated compound such as arsine, phosphine, or boron trifluoride, safely and stably storing the gaseous compound in a considerable amount, preventing the gaseous compound from being released to atmosphere, and safely and efficiently delivering the gaseous compound.

Disclosure of the Invention

In the present invention, developed is a method of bringing a gaseous hydrogenated compound or a gaseous halogenated compound in a predetermined amount into contact with activated carbon composed of a phenol resin as a main raw material, adsorbing the gaseous compound to the activated carbon under a storage environment at a pressure which is not more than atmospheric pressure and storing the adsorbed gaseous compound, and desorbing at least a part of the adsorbed gaseous compound and delivering the part to a work environment.

In the present invention, developed is an apparatus for bringing a gaseous hydrogenated compound or a gaseous halogenated compound in a predetermined amount to be used into contact with activated carbon composed of a phenol resin as a main raw material, adsorbing the gaseous compound to the activated carbon under a storage environment at a pressure which is not more than atmospheric pressure and storing the adsorbed gaseous compound, and desorbing at least a part of the adsorbed gaseous compound and delivering the part to a work environment.

In the present invention, developed are a method of and an apparatus for using, as activated carbon composed of a phenol resin as a main raw material which is used for the above-mentioned method and apparatus, a granular carbon formed product obtained by bonding activated particles formed by carbonizing phenol resin powder, which has a specific surface area of 700 to 1500 $m^2/g$, has pores having a pore diameter of 0.01 to 10 $\mu m$, the pore volume of which is 0.1 to 1.0 cc/g, has pores having a pore diameter of not more than 10 nm, the pore volume of which is 0.20 to 0.80 cc/g, and containing not less than 75 % by volume pores having a pore diameter of 0.6 to 0.8 nm, has a bulk density of 0.4 to 1.1 g/cc, has a packing density of 0.30 to 0.70 g/cc, has an ash content of not more than 1.0 %, and has a tensile strength of not less than 30 $kg/cm^2$.

In the present invention, developed is a method of treating activated carbon by a series of steps comprising a step of adsorbing a gaseous hydrogenated compound or a gaseous halogenated compound upon bringing the gaseous compound into contact with activated carton in advance in a sealed space, a step of accelerating a reaction of a system passing through the adsorbing step, and a step of expelling the gaseous compound passing through the reaction accelerating step from the sealed space, to prevent, when a gaseous hydrogenated compound or a gaseous halogenated compound of a type which is the same as or different from that of the gaseous compound is adsorbed to be stored, one or more impurity gases from being generated by contact between the activated carbon and the stored gaseous compound and prevent the purity of the stored gaseous compound from being decreased.

In the present invention, developed is an apparatus for treating activated carbon by a series of steps comprising a step of adsorbing a gaseous hydrogenated compound or a gaseous halogenated compound upon bringing the gaseous compound into contact with activated carbon in advance in a sealed space, a step of accelerating a reaction of a system passing through the adsorbing step, and a step of expelling the gaseous compound passing through the reaction accelerating step from the sealed space, to prevent, when a gaseous hydrogenated compound or a gaseous halogenated compound of a type which is the same as or different from that of the gaseous compound is adsorbed to be stored, one or more impurity gases from being generated by contact between the activated carbon and the stored gaseous compound and prevent the purity of the stored gaseous compound from being decreased.

In the present invention, developed is a method or an apparatus comprising a heating unit with a temperature control function capable of heating, in adsorbing a gaseous hydrogenated compound or a gaseous halogenated compound to activated carbon composed of a phenol resin as a main raw material under a storage environment at a pressure which is not more than atmospheric pressure upon bringing the gaseous compound into contact with the activated carbon and storing the adsorbed gaseous compound, and desorbing at least a part of the adsorbed gaseous compound and delivering the part to a work environment, a container containing the activated carbon, together with the activated carbon, in order to increase an amount, which can be effectively utilized, of the stored gaseous compound.

Brief Description of Drawings

Fig. 1 is a schematic view showing an apparatus for storing a gaseous hydrogenated compound or a gaseous halogenated compound and then delivering the gaseous compound in the present invention;

Fig. 2 is a schematic view showing an example of the apparatus in the present invention;

Fig. 3 is a graph showing the changes with time in pressures in test containers in the apparatus shown in Fig. 2 in a case where pre-treatment is carried out using a method according to the present invention at various heating temperatures using arsine as an ion implantation gas;

Fig. 4 is a bar graph showing the amount of increase of the weight of a test container containing an activated carbon adsorbent after an elapse of 48 hours in Fig. 3 from the initial weight of the test container containing the activated carbon adsorbent;

Fig. 5 is a graph showing the change in purity of arsine for storage in a case where the arsine for storage is injected into a test container after activated carbon is pre-treated in accordance with contents described in the present invention at various heating temperatures; and

Fig. 6 is a graph showing the change in purity of phosphine for storage in a case where the phosphine for storage is injected into a test container after activated carbon is pre-treated in accordance with contents described in the present invention at various heating temperatures.

Best Mode for Carrying Out the Invention

Embodiments of the present invention will be described in detail later.

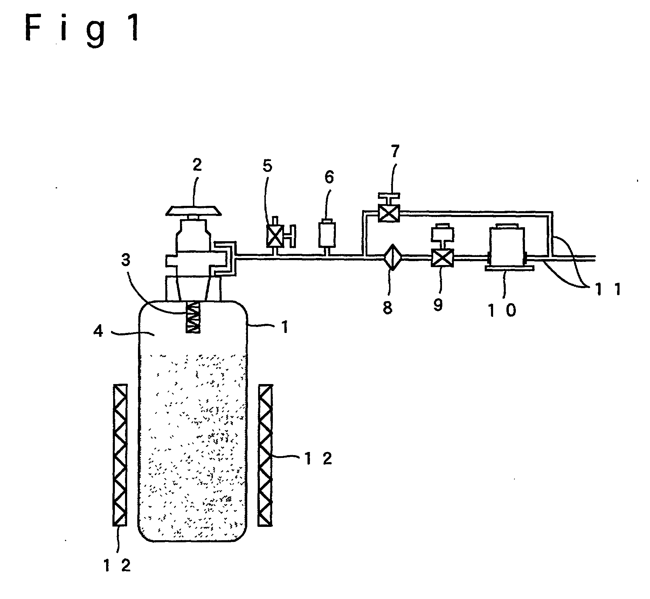

Fig. 1 illustrates an apparatus in an embodiment of the present invention, which is characterized in that a gaseous hydrogenated compound or a gaseous halogenated compound in a predetermined amount is stored upon being adsorbed to activated carbon 12 composed of a phenol resin as a main raw material under a storage environment at a pressure which is not more than atmospheric pressure by being brought into contact with the activated carbon, and is evacuated to a negative pressure in order to desorb at least a part of the adsorbed gaseous compound and deliver the part to a work environment. The apparatus comprises a container 1, a container valve 2, a filter 3 containing the container valve, an upper space 4, a purge valve 5, a pressure gauge 6, a bypass valve 7, a line filter 8, a pneumatic actuator valve 9, a mass flow controller 10, connecting piping 11, and activated carbon 12. The apparatus preferably comprises a heater 13 for heating the activated carbon 12 contained in the container 1 and a unit (not shown) for controlling the heating temperature. The connecting piping 11 preferably has sufficient vacuum airtightness.

In the present invention, used as the activated carbon is preferably activated carbon composed of a phenol resin as a main raw material, in which a pore diameter and a pore volume can be suitably controlled and which is superior in uniformity as the raw material and uniformity between lots, and more preferably activated carbon which is a granular carbon formed product obtained by bonding activated particles formed by carbonizing phenol resin powder, which has a specific surface area of 700 to 1500 $m^2/g$, has pores having a pore diameter of 0.01 to 10 μm, the pore volume of which is 0.1 to 1.0 cc/g, has pores having a pore diameter of not more than 10 nm, the pore volume of which is 0.20 to 0.80 cc/g, and containing not less than 75 % by volume pores having a pore diameter of 0.6 to 0.8 nm, has a bulk density of 0.4 to 1.1 g/cc, has a packing density of 0.30 to 0.70 g/cc, has an ash content of not more than 1.0 %, and has a tensile strength of not less than 30 $kg/cm^2$.

As proposed in the present invention, used as the activated carbon is more preferably activated carbon composed of a phenol resin as a main raw material, which is treated by a series of steps comprising a step of adsorbing a gaseous hydrogenated compound or a gaseous halogenated compound, such as arsine, phosphine, or boron trifluoride upon bringing the gaseous compound into contact with the activated carbon in advance in a sealed space, a step of accelerating a reaction of a system passing through the adsorbing step, and a step of expelling the gaseous compound passing through the reaction accelerating step from the sealed space.

The specific surface area of the activated carbon is preferably 700 to 1500 $m^2/g$ as described above, and is more preferably 850 to 1400 $m^2/g$, and still more preferably 900 to 1300 $m^2/g$. The reason for this is that it is not preferable that the specific surface area of the activated carbon is less than 700 $m^2/g$ because the total amount of adsorbed portions of the gaseous compound such as arsine or phosphine is so small that the adsorption capacity becomes small, while it is not preferable that the specific surface area is not less than 1500 $m^2/g$ because the pore volume of the pores having a pore diameter of 0.6 to 0.8 nm, which are considered to effectively function in adsorbing the gaseous compound such as arsine or phosphine becomes small.

In the activated carbon, the pore volume of the pores having a pore diameter of 0.01 to 10 $\mu m$ is preferably 0.1 to 1.0 cc/g, as described above, more preferably 0.2 to 0.8 cc/g, and still more preferably 0.3 to 0.7 cc/g. The reason for this is that it is not preferable that the pore volume of the pores having a pore diameter of 0.01 to 10 $\mu$ m is less than 0.1 cc/g because the diffusion rate in the pores of the gaseous compound such as arsine or phosphine becomes low so that the adsorption rate and the desorption rate decrease, while it is not preferable that the pore volume of the pores having a pore diameter of 0.01 to 10 $\mu$ m is more than 1.0 cc/g because the bulk density and the mechanical strength of the activated carbon become low.

It is preferable that the pore volume of the pores having a pore diameter of not more than 10 nm is 0.20 to 0.80 cc/g, and the ratio of the pore volume of the pores having a pore diameter of 0.6 to 0.8 nm to the pore volume of the pores having a pore diameter of not more than 10 nm is not less than 75 %. The pore volume of the pores having a pore diameter of not more than 10 nm is preferably 0.30 to 0.70 cc/g, and more preferably 0.30 to 0.60 cc/g. The reason for this is that it is not preferable that the pore volume of the pores having a pore diameter of not more than 10 nm becomes small because the pore volume of the pores having a pore diameter of 0.6 to 0.8 nm also decreases so that the adsorption capacity of the gaseous compound such as arsine or phosphine decreases, while it is not preferable that the pore volume of the pores having a pore diameter of not more than 10 nm is too large because the ratio of the pore volume of the pores having a pore diameter of 0.6 to 0.8 nm decreases.

The ratio of the pore volume of the pores having a pore diameter of 0.6 to 0.8 nm to the pore volume of the pores having a pore diameter of not more than 10 nm is not less than 75 %, preferably not less than 78 %, and most preferably not less than 80 %. As a result of respectively calculating the major axes of molecules of arsine ($AsH_3$) and phosphine ($PH_3$) using the van der Waals radii of the molecules with respect to a structure in which the sizes of the molecules are calculated using the molecule mechanics, they are approximately 0.45 nm and 0.49 nm. However, pores which effectively function in adsorbing the molecules are pores having a diameter slightly larger than the diameters of the molecules, which are considered to be pores having a pore diameter of 0.6 to 0.8 nm. Pores having a pore diameter, which is much smaller than the sizes of the molecules, are not preferable because the adsorption rate of the molecules becomes low. It is not preferable that the pore diameter is significantly larger than the sizes of the molecules because the desorption rate becomes high simultaneously with the adsorption rate so that the amount of equilibrium adsorption decreases.

Therefore, it is not preferable that the ratio of the pore volume of the pores having a pore diameter of 0.6 to 0.8 nm, which effectively function in adsorbing the molecules, to the pore volume of the pores having a pore diameter of not more than 10 nm is less than 75 % because the adsorption capacity of the gaseous compound such as arsine ($AsH_3$) or phosphine ($PH_3$) decreases.

The bulk density of particles of the activated carbon is preferably 0.4 to 1.2 g/cc, as described above, more preferably 0.5 to 1.0 g/cc, and still more preferably 0.6 to 0.8 g/cc. The reason for this is that it is not preferable that the bulk density is too low because the adsorptivity per unit volume in a container such as a bomb decreases when the activated carbon is packed into the container, while it is not preferable that the bulk density is too high because the absorptivity decreases due to the decrease in the continuity of the pores of the activated carbon.

The packing density in a case where the activated carbon is packed into the container such as the bomb is preferably 0.3 to 0.7 g/cc, as described above, and more preferably 0.5 to 0.65 g/cc. The reason for this is that it is not preferable that the packing density is too low because the adsorptivity per unit volume in the container decreases. The shape of the activated carbon used in the present invention may be in a cylindrical shape or shapes having other irregular cross sections in addition to a columnar shape or a spherical shape.

The size of the particles of the activated carbon is 0.3 to 5 mm, preferably 0.6 to 4 mm, and more preferably 0.8 to 3 mm. The reason for this is that it is not preferable that the particles are too large because the packing density cannot be increased when the activated carbon is packed into the container such as the bomb, while it is not preferable that the particles are too small because the workability is degraded at the time of producing the particles and at the time of packing the activated carbon into the container.

The reason why the activated carbon is treated by being subjected to a series of steps comprising a step of adsorbing a gaseous hydrogenated compound or a gaseous halogenated compound, such as arsine, phosphine, or boron trifluoride, upon bringing the gaseous compound into contact with the activated carbon in advance in a sealed space, a step of accelerating a reaction of a system passing through the adsorbing step, and a step of expelling the gaseous compound passing through the reaction accelerating step from the sealed space is that hydrogen, nitrogen, oxygen, and carbon atoms existing on the surfaces of the pores of the activated carbon are previously forced to be removed to prevent one or more impurities from being included in the stored gaseous compound.

When the gaseous compound is adsorbed upon being brought into contact with the activated carbon in advance, as described above, the gaseous compound is not only physically adsorbed to the surface of the activated carbon but also chemically reacted with the hydrogen, nitrogen, oxygen and carbon atoms on the surface of the activated carbon to generate hydrogen, nitrogen, carbon monoxide and carbon dioxide. When the gaseous compound and the impurity gases thus generated are expelled, the amount of each of the hydrogen, nitrogen, oxygen and carbon atoms which react with the gaseous hydrogenated compound or the gaseous halogenated compound in the activated carbon is decreased. When the gaseous hydrogenated compound or the gaseous halogenated compound is stored upon being adsorbed to the activated carbon, it is possible to prevent the impurity gases from being included by a reaction of the atoms with the above-mentioned gaseous compound.

In the above-mentioned reaction accelerating step, it is preferable to heat the sealed space in which the gaseous hydrogenated compound or the gaseous halogenated compound is adsorbed to the activated carbon. The temperature at which the sealed space is heated is preferably not less than 30°C which is the temperature of a general operating environment in a case where the gaseous hydrogenated compound or the gaseous halogenated compound is stored and is then delivered, more preferably not less than 50°C, and still more preferably 100°C to 200°C. It is not preferable that the temperature exceeds 200°C because the gaseous compound such as arsine self-decomposes.

In a case where the sealed space is heated in the reaction accelerating step, as described above, heating time greatly depends on heating temperatures. Under the condition of a heating temperature of not less than 100°C, for example, it is preferably not less than one hour, more preferably not less than five hours, and still more preferably not less than eight hours. The reason for this is that when the heating time is short, a reaction between the gaseous hydrogenated compound or the gaseous halogenated compound and each of the hydrogen, nitrogen, oxygen, and carbon atoms in the activated carbon becomes incomplete. When the gaseous hydrogenated compound or the gaseous halogenated compound is stored upon being adsorbed to the activated carbon, the gaseous compound reacts with the hydrogen, nitrogen, oxygen, and carbon atoms remaining in the activated carbon, so that the impurity gases are included. The condition that a few days are required for heating is not preferable because working efficiency is very low.

Furthermore, in the above-mentioned expelling step, it is preferable that the pressure inside the sealed space is not more than atmospheric pressure. Therefore, the amount of the gaseous hydrogenated compound or the gaseous halogenated compound which is packed into the sealed space, as described above, and the heating temperature are suitably selected so that the pressure inside the sealed space is not more than atmospheric pressure.

Furthermore, a buffer space may be provided in the sealed space in order to smoothly expel, in the expelling step, the gaseous hydrogenated compound or the gaseous halogenated compound and the impurity gases generated in the reaction accelerating step.

It is preferable that the expelling step is carried out by evacuating the sealed space to a pressure of approximately 10 to 5 mmHg with a vacuum pump in a state where the temperature is maintained at 100°C to 200°C.

In treating the activated carbon in the above-mentioned manner, the activated carbon may be packed into containers such as bombs after being treated. It is dangerous to take out the activated carbon treated with extremely toxic arsine, for example, and distribute the activated carbon among the containers, and its work becomes complicated. Preferably, the above-mentioned treatment is carried out for each of the containers after the activated carbon is packed into the container.

In a case where the gaseous hydrogenated compound or the gaseous halogenated compound, such as arsine, phosphine, or boron trifluoride, is adsorbed and is immediately used, it is heated at such a high temperature that the gaseous hydrogenated compound or the gaseous halogenated compound does not thermally decompose in treating the activated carbon in the above-mentioned manner. Consequently, the activated carbon can be efficiently treated in several hours.

On the other hand, in a case where there is a sufficient time period elapsed until the gaseous hydrogenated compound or the gaseous halogenated compound, such as arsine, phosphine, or boron trifluoride, is used upon being adsorbed to the activated carbon, the gaseous hydrogenated compound or the gaseous halogenated compound is allowed to stand in a state where it is put in the container containing the activated carbon, and the gaseous compound in the container is expelled when it is used, and is replaced with a new gaseous hydrogenated compound or gaseous halogenated compound, such as arsine, phosphine, or boron trifluoride. When the amount of the gaseous hydrogenated compound or the gaseous halogenated compound used for pre-treating the activated carbon is an amount required to completely terminate the reaction with the activated carbon, it is possible to reduce the useless use of the gaseous hydrogenated compound or the gaseous halogenated compound.

When the pre-treatment is carried out by suitably selecting the amount of the gaseous hydrogenated compound or the gaseous halogenated compound, such as arsine, phosphine, or boron trifluoride and the heating temperature to set the pressure inside the sealed space to not more than atmospheric pressure, the gaseous compound can be prevented from leaking outward at the time of expelling in the expelling step. Therefore, impurities in the activated carbon can be safely removed.

The activated carbon is treated by a series of steps comprising a step of adsorbing a gaseous hydrogenated compound or a gaseous halogenated compound upon bringing the gaseous compound into contact with the activated carbon in advance in a sealed space, a step of accelerating a reaction of a system passing through the adsorbing step, and a step of expelling the gaseous compound passing through the reaction accelerating step from the sealed space. When a gaseous hydrogenated compound or a gaseous halogenated compound of a type which is the same as or different from the above-mentioned gaseous compound is stored upon being adsorbed to the activated carbon thus treated, one or more impurity gases can be prevented from being generated by contact between the activated carbon and the gaseous compound, and the purity of the stored gaseous compound can be prevented from being decreased. Various charges and modifications of the above-mentioned method and apparatus can be made within the scope of the present invention as set forth in the accompanying claims.

For example, the amount of the activated carbon packed into the container may be suitably selected in relation to the amount of the gaseous compound, such as arsine, to be stored. The gaseous compound which is brought into contact with the activated carbon in advance in the sealed space and the gaseous compound to be stored need not be necessarily the same. For example, phosphine or boron trifluoride used as an ion implantation gas in a step of doping semiconductors may be used as the gaseous compound which is brought into contact with the activated carbon in advance in the sealed space, and arsine may be used as the gaseous compound to be stored after impurities in the activated carbon are forced to be removed.

In the method and the apparatus according to the present invention, in adsorbing the gaseous hydrogenated compound or the gaseous halogenated compound to the activated carbon and storing the adsorbed gaseous compound, and then delivering the gaseous compound, when a heating unit is provided to heat the activated carbon to which the gaseous compound is adsorbed, the adsorption capacity of the gaseous compound in the activated carbon is reduced by the heating, thereby making it possible to increase the amount of the gaseous compound which can be delivered under the same pressure. Consequently, the amount of the stored gaseous compound which can be effectively utilized is increased.

In heating the activated carbon to which the gaseous compound is adsorbed, as described above, the heating temperature is preferably not less than 30°C which is the temperature of a general operating environment where the apparatus is employed, more preferably not less than 40°C, and still more preferably 50°C to 200°C. It is not preferable that the heating temperature exceeds 200°C because the gaseous compound such as arsine self-decomposes.

In the method and the apparatus in which the heating unit is thus provided to heat the activated carbon to which the gaseous compound is adsorbed, it is also preferable to use, as the above-mentioned activated carbon, activated carbon treated by a series of steps comprising a step of adsorbing a gaseous hydrogenated compound or a gaseous halogenated compound upon bringing the gaseous compound into contact with the activated carbon in advance in a sealed space, a step of accelerating a reaction of a system passing through the adsorbing step, and a step of expelling the gaseous compound passing through the reaction accelerating step from the sealed space.

An example of a method of producing the activated carbon utilized in the present invention will be described in detail below.

Generally, a phenol resin used for producing the activated carbon is roughly classified into a resol resin, a novolak resin, other special phenol resins, and their modified products. The phenol resin may be any phenol resin, and is not particularly limited. For example, granular or powdery special phenol resins disclosed in Examined Published Japanese Patent Application Nos. 62-30210 and 62-30212 can be suitably used. The outline of the method of producing the special phenol resin is as follows.

Phenol or a mixture of phenol and a nitrogen-containing compound, such as urea, melamine or aniline, is added to a combined aqueous solution comprising 15 to 22 % by weight of hydrochloric acid and 7 to 15 % by weight of formaldehyde at a ratio of not more than 1/15 of the mixed aqueous solution while stirring the combined aqueous solution at room temperature. The stirring is stopped before white turbidity appears in a reaction system, and the system is allowed to stand. A granular phenol resin in pink is formed and is settled in the reaction system while the system is allowed to stand. The entire reaction system is then heated while being stirred again, is raised to a temperature of 40 to 90°C to complete the reaction, is then washed with water, and is subsequently neutralized with aqueous ammonia, followed by washing with water, dehydration and drying. Much of the granular phenol resin thus obtained is composed of primary particles having a particle diameter of 0.1 to 150 μm or their secondary agglomerates.

The phenol resin thus obtained is special phenol resin powder which differ in properties from a resol resin and a novolak resin, and can be suitably used as the phenol resin powder used for producing the activated carbon utilized in the present invention. When the phenol resin is heated and refluxed in 500 ml of anhydrous methanol, a methanol solubility S indicated by the following equation can be used as an index representing reactivity:

$$S = \{(W_0 - W_1) / W_0\} \times 100$$

where

$W_0$ : the weight (g) of the resin used
$W_1$ : the weight (g) of the resin remaining after heating and reflux
$S$ : the methanol solubility (% by weight) of the resin

The higher the methanol solubility is, the higher the reactivity is. In the present invention, phenol resin powder having a methanol solubility of generally not more than 70 % by weight, preferably not more than 30 % by weight, and most preferably not more than 10 % by weight is used.

The reason for this is that when the methanol solubility is not less than 70 % by weight, the phenol resin powder has high thermal fusibility, so that connecting gaps among phenol resin particles are filled due to thermal fusion in a heating step in the course of carbonization. Accordingly, the connectivity of pores of an obtained carbide is degraded, and the adsorptivity in obtained activated carbon is degraded. In order to obtain activated carbon having sufficient adsorptivity, therefore, it is preferable to use phenol resin powder having a methanol solubility in the above-mentioned range.

Examples of a method of producing phenol resin powder used for producing the other activated carbon utilized in the present invention include a method of adding and reacting a hydrophilic polymer compound to and with a condensed product obtained by reacting phenols and formaldehyde under the presence of a nitrogen-containing compound (Examined Published Japanese Patent Application No. 53-12958), and a method of mixing a prepolymer obtained by reacting phenol and formaldehyde in a basic aqueous solution with a protective colloid and solidifying a mixture obtained to an inert solid in the shape of beads under an acid (Examined Published Japanese Patent Application No. 51-13491). Furthermore, phenol resin powder produced by methods described in Unexamined Published Japanese Patent Application Nos. 61-51019, 61-127719, 61-258819, 62-272260, 62-1748, etc. can be also used.

A resol resin is generally obtained by reacting phenol and formaldehyde under the condition that formaldehyde is excessive such that the molar ratio of phenol to formaldehyde is 1 : 1 to 1 : 2 under the presence of a basic catalyst such as sodium hydroxide, ammonia or organic amine. The resol resin thus obtained comprises a monomer to a trimer of phenol having a relatively large amount of a free methylol group as a main component, and is high in reactivity.

A novolak resin is generally obtained by reacting phenol and formaldehyde under the condition that phenol is excessive such that the molar ratio of phenol to formaldehyde is 1 : 0.7 to 1 : 0.9 under the presence of an acidic catalyst such as an oxalic acid. The novolak resin thus obtained is composed of a trimer to a pentamer where phenols are bonded mainly by a methylene group as a main component, and hardly contains a free methylol group. Therefore, the novolak resin itself does not have self-crosslinking properties and has thermal plasticity. In the case of the novolak resin, a hardened product is obtained by adding a crosslinking agent which is a formaldehyde generator such as hexamethylentetramine and an organic basic catalyst generator or mixing a solid acidic catalyst and paraformaldehyde, for example, followed by a reaction under heating.

The resol resin, the novolak resin, and so forth are used as raw material resin powder of activated carbon after being hardened once and then pulverized.

The particle diameter of the phenol resin powder used for producing the activated carbon utilized in the present invention is generally 0.1 to 150 $\mu$m, preferably 0.5 to 50 $\mu$m, and more preferably 1 to 30 $\mu$m.

Although the type of a binder used for producing the activated carbon utilized in the present invention is not particularly limited, a liquid thermosetting resin, polyvinyl alcohol (PVA), creosote oil, etc. can be suitably used.

Examples of the liquid thermosetting resin include a liquid resol resin, a liquid melamine resin, or their modified resins.

The liquid resol resin can be produced by reacting phenol with an excessive amount of aldehyde under the presence of a basic catalyst, as described above, and is composed of a monomer to a trimer of phenol having a relatively large amount of a free methylol group as a main component.

The liquid melamine resin is a so-called thermosetting resin. A chemical reaction is accelerated by heating, so that the liquid melamine resin finally becomes a hardened product that is neither soluble nor fusible through the form of a hydrophilic initial polymerization product or the state of a hydrophobic condensation product which is somewhat condensed.

The liquid melamine resin is produced by adding aldehyde, generally formaldehyde, to melamine. Various alcohols may, in some cases, be simultaneously used. In the formation of the melamine resin, formaldehyde is first added as a methylol group to melamine. The formation then progresses by such a reaction that dehydration and condensation occur between the methylol group and an amino group or an imino group of another molecule to form a methylene group, such a reaction that dehydration and condensation occur between methylol groups to form a dimethylene ether bond, or such a reaction that dehydration occur between a methylol group and an alcohol to form an ether.

The liquid melamine resin can be classified into a water-soluble resin and an oil-soluble resin. The water-soluble resin can be generally produced using methanol as an alcohol. On the other hand, the oil-soluble resin is also called a butylated melamine resin, and is generally produced using butanol as an alcohol.

In producing the activated carbon, the liquid melamine resin used as a binder may be either water-soluble or oil-soluble, and those produced by known processes can be used.

In fabricating the activated carbon, a polyvinyl alcohol used as the binder preferably has a polymerization degree of 100 to 5000 and a saponification degree of not less than 70 %, and those partially modified by a carboxyl group or the like are also suitably used.

In producing the activated carbon, the phenol resin powder and the binder component are mixed with each other, and a mixture obtained is then granulated, to obtain a granular formed product. The amount of the binder to be mixed with the phenol resin powder is in the range of 5 to 90 parts by weight, preferably 10 to 60 parts by weight, and more preferably 20 to 40 parts by weight per 100 parts by weight of the phenol resin powder. The reason why the amount of the binder is thus in the range of 5 to 90 parts by weight per 100 parts by weight of the phenol resin powder is that if the amount of the binder is less than 5 parts by weight, the workability at the time of the granulation is lowered to make extraction by a dice difficult, resulting in some problems. For example, the granulated product is not uniform in shape and is low in strength, and powder is liable to be generated. On the other hand, when the amount of the binder is more than 90 parts by weight, the workability at the time of the granulation is lowered, and the connectivity of pores in a pellet after carbonization and activation is lowered to degrade the performance of the binder as an adsorbent.

In mixing the phenol resin powder and a binder component with each other, a commercially available mixing and stirring machine such as a ribbon mixer, a V-type mixer, a cone mixer, or a kneader is used at room temperature or under heating.

Other additives can be also added in addition to the phenol resin and the binder component. For example, it is also possible to add a suitable amount of starch, crystalline cellulose powder, methylcellulose, water, and a solvent, for example, and add a small amount of coke and coconut shell, for example.

Furthermore, in producing the activated carbon, it is possible to add a surface active agent, such as ethylene glycol, polyoxyethylene, alkylether, polyoxyethylene fatty acid ester, or ammonium polycarboxylic acid salt, a crosslinking agent such as polyvinyl alcohol, a plasticizer for extruding granulation, and so forth in a range in which the properties of the activated carbon are not degraded in order to improve the workability at the time of mixing and at the time of granulation.

The phenol resin, the binder component, and so forth are formed into a granular product after being uniformly mixed with one another, as described above. The formation into a granular product can be performed by using a uniaxial or biaxial wet extruding granulator, a vertical granulator such as a basket ryuzer (commercially available), and a semidry disk pelletter, for example. Further, the formation into the granular product is generally performed at room temperature. However, it may be performed under heating depending on cases. The granular product thus obtained is generally dried in a temperature range of approximately 50 to 400°C, to obtain a granular formed product.

The granular formed product is generally in the shape of a columnar or spherical pellet, and is adjusted at the time of granulation such that the shape of the pellet after carbonization and activation becomes a predetermined shape.

In producing the activated carbon utilized in the present invention, the granular formed product obtained in the above-mentioned manner or a carbide obtained by heat-treating the granular formed product under a non-oxidation atmosphere in a temperature range of 500 to 900°C is used, and is subjected to activation treatment in a temperature range of 700 to 1100°C in a range in which a weight decrease rate based on the carbide is 5 to 40 %.

In heat-treating the granular formed product under the non-oxidation atmosphere in the temperature range of 500 to 900°C, as described above, to obtain the carbide, heat-treatment is carried out under a non-oxidation atmosphere such as nitrogen, argon, or helium using a heat treatment apparatus such as an electric furnace or an external heating gas furnace. The temperature at which heat-treatment is carried out is generally 500 to 900°C, as described above, preferably 550 to 850°C, and more preferably 600 to 800°C. The reason for this is that activation cannot be efficiently performed because the activation rate in the subsequent activation treatment step becomes low if the temperature at which heat-treatment is carried out is higher than 900°C, while the granular formed product is difficult to sufficiently carbonize because the temperature is low and the rate at which the granular formed product is carbonized becomes low if the temperature is lower than 500°C.

A temperature region where the granular formed product or the carbide obtained by the heat treatment is subjected to activation treatment is generally 700 to 1100°C, preferably 800 to 1000°C, and more preferably 850 to 950°C. The reason for this is that the pore volume in the obtained activated carbon is decreased by thermal shrinkage, and the surface of the activated carbon is oxidized to reduce the abrasion resistance if the temperature at which activation treatment is carried out is higher than 100°C, while the activation is not sufficiently performed to reduce the adsorptivity in the obtained activated carbon if the temperature is lower than 700°C.

In carrying out the activation treatment, as described above, it is possible to use oxygen, carbon dioxide, steam, or a mixed gas of two or more types of the gases, an atmospheric gas, such as nitrogen, argon, or helium, containing the gases, or a combustion waste gas such as methane, propane, or butane.

The reason why the weight decrease rate based on the carbide is 5 to 40 % in carrying out the activation treatment, as described above is that if the weight decrease rate is less than 5 %, the pores of the activated carbon are insufficiently developed, so that a sufficient performance cannot be ensured due to a too small power volume in the obtained activated carbon. On the other hand, if the weight decrease rate is more than 40 %, the ratio of the pores having a pore diameter of 0.6 to 0.8 nm, which effectively function in adsorbing the gaseous compound such as arsine or phosphine, becomes low in the obtained activated carbon, and the bulk density of the particles of the activated carbon also becomes low, so that the amount per unit volume of adsorbed portions which effectively function decreases, and the amount of the gaseous compound, such as arsine or phosphine, to be adsorbed decreases when the activated carbon is packed into the container such as the bomb.

The activated carbon obtained in the above-mentioned manner is packed into the container such as the bomb in a gas manufacturing company, for example, and is used for adsorbing the gaseous compound, such as arsine, phosphine, or boron trifluoride, used as an ion implantation gas in the semiconductor industry and stably storing the gaseous compound until it is used. In a location where semiconductors are manufactured, the gaseous compound adsorbed to the activated carbon is taken out of the bomb upon being evacuated to a negative pressure, as required. Since the interior of the bomb is maintained at a pressure which is not more than atmospheric pressure. Accordingly, there is little danger that extremely toxic arsine or phosphine leaks out of the bomb to environmental circumstances.

Examples of the gaseous compound which is stored upon being adsorbed to the activated carbon include gaseous compounds selected from a group consisting of arsine, phosphine, boron trifluoride, boron trichloride, tungsten hexafluoride, silane, diborane, chlorine, $B_2D_6$, $(CH_3)_3Sb$, hydrogen fluoride, hydrogen chloride, hydrogen iodide, germane, ammonia, stibine, hydrogen sulfide, hydrogen selenide, hydrogen telluride, and $NF_3$. Particularly, examples of the gaseous compound suitably adsorbed and stored include arsine, phosphine, and boron trifluoride.

(Embodiment)

Measuring and evaluating methods used in the present invention will be first described below.

(1) Method of Measuring Amount of Adsorbed Arsine and Amount of Released Arsine

A test container made of stainless steel having an inner diameter of 30 mm, a length of 150 mm, and an internal volume of 100 ml which has a diaphragm cut-off valve provided at its one end is previously weighed by a chemical balance. The weight of the test container at this time is taken as W0.

After an adsorbent used for a test is packed into the test container, the test container is connected to a vacuum pump via the cut-off valve and is evacuated to a pressure of not more than 0.01 mmHg. Further, the test container is gradually heated to a temperature of 350°C from outside by a heating device, and is successively evacuated to a pressure of not more than 0.01 mmHg with the vacuum pump. Thereafter, the test container is returned to an ordinary temperature by being allowed to stand, and is weighed again. The weight of the test container at this time is taken as W1.

Arsine is then fed into the test container via the cut-off valve while maintaining the test container at a constant temperature of 20°C by an incubator, and is introduced into the test container, while adjusting the pressure inside the test container to 700 mmHg which is not more than atmospheric pressure, until it is absorbed no more. The weight of the test container at this time is taken as W2. The amount of the adsorbent is found by (W1 - W0), and the amount of the adsorbed arsine is found by (W2 - W1).

The test container is then connected to a gas chromatography mass analyzer via a pressure gauge, a flow rate controller and a vacuum pump, to conduct a quantitative analysis. The pressure gauge is located to measure the pressure inside the test container in a case where the test container is evacuated with the vacuum pump, and the flow rate controller is located to control the flow rate of the released arsine in a case where the arsine flows out of the test container. The test container is evacuated to a pressure of 20 mmHg with the vacuum pump while adjusting the flow rate of the released arsine to 1 ml/min to 10 ml/min. The test container is then weighed again. The weight of the test container at this time is taken as W3. The amount of the released arsine is determined by (W2 - W3), and the amount of the remaining arsine is determined by (W3 - W1).

(2) Method of Measuring Pressure Change After 20 Days

An adsorbent used for a test is packed into a test container made of stainless steel having an inner diameter of 30 mm, a length of 150 mm, and an internal volume of 100 ml which has a diaphragm cut-off valve provided at its one end, and is then connected to the test container via the cut-off valve. The test container is evacuated to a pressure of not more than 0.01 mmHg. Further, the test container is gradually heated to a temperature of 350°C from outside by a heating device, and is successively evacuated to a pressure of not more than 0.01 mmHg with the vacuum pump. Thereafter, the text container is returned to an ordinary temperature by being allowed to stand.

Arsine is then fed into the text container via the cut-off valve while maintaining the test container at a constant temperature of 20°C by an incubator, and is introduced into the test container, while adjusting the pressure inside the test container to 700 mmHg which is not more than atmospheric pressure, until it is absorbed no more. The weight of the text container at this time is taken as W4.

The weight of the test container after 20 days is then measured while maintaining the test container at a constant temperature of 20°C by an incubator. The weight of the test container at this time is taken as W5. The value of (W4 - W5) is calculated, to confirm that there is no difference due to leakage and read the internal pressure.

(3) Method of Measuring Amount of Adsorbed Arsine under Plural Pressures

A test container made of stainless steel having an inner diameter of 30 mm, a length of 150 mm, and an internal volume of 100 ml which has a diaphragm cut-off valve provided at its one end is previously weighed by a chemical balance. The weight of the test container at this time is taken as W6.

After an adsorbent used for a test is then packed into the test container, the test container is connected to a vacuum pump via the cut-off valve and is evacuated to a pressure of not more than 0.01 mmHg. Further, the test container is gradually heated to a temperature of 350°C from outside by a heating device, and is successively evacuated to a pressure of not more than 0.01 mmHg with the vacuum pump. Thereafter, the test container is returned to an ordinary temperature by being allowed to stand, and is weighed again. The weight of the test container at this time is taken as W7.

Arsine is then fed into the test container via the cut-off valve while maintaining the test container at a constant temperature of 25°C by an incubator, and is introduced into the test container, while adjusting the pressure inside the test container to 10, 20, 30, 50, 100, 200, 300, 400, 500, 600, and 700 mmHg which are not more than atmospheric pressure, until it is absorbed no more at the time of each of the pressures. The weight of the test container at this time is taken as Wn. The amount of the adsorbent is determined by (W7 - W6), and the amount of the adsorbed arsine is determined by (Wn - W7).

(4) Method of Measuring Tensile Strength

The tensile strength of particles of activated carbon is measured by a Kiya-type hardness tester. The tensile strength to be evaluated by measuring the strength is calculated by the following equation from a load P [kg], a particle diameter d[cm], and a particle length l [cm] in a case where the particles are pulverized:

$$\text{Tensile strength} : \sigma[\text{kg/cm2}] = 2P/(\pi \cdot d \cdot l)$$

(5) Method of Measuring Specific Surface Area of Activated Carbon

Approximately 0.1 g of each activated carbon is accurately weighed, and is then put in a cell dedicated to a high precision full-automatic gas adsorber BELSORP28 (manufactured by Nippon Bel Co., Ltd.). Nitrogen is adsorbed using the adsorber, to find a specific surface area by the BET (Brunauer-Emmett-Teller) method.

(6) Method of Measuring Pore Volume

In measuring the pore volume of pores of an adsorbent, the pore volume of pores having a pore diameter in a range of 0.01 to 10 μm is measured by a method of mercury penetration using a porosimeter (Poresizer 9310 manufactured by Shimadzu Corporation), and the pore volume of pores having a pore diameter of not more than 10 nm is measured by measuring nitrogen adsorption using a full-automatic gas adsorption measuring device (BELSORP 28 manufactured by Nippon Bel. Co., Ltd.). Specifically, the pore volume of pores having a pore diameter in a range of 2 to 10 nm is found by conducting a D-H analysis of an adsorption isotherm of nitrogen gas at 77 K, and the pore volume of pores having a pore diameter of not more than 2 nm is found by conducting an analysis using an MP method from a t-plot of an adsorption isotherm of nitrogen gas at 77 K.

(7) Method of Measurikng Ash Content

1 g of a specimen dried at 105°C for two hours is precisely weighed in a platinum crucible, is ashed at 700°C for two hours, and is precisely weighed again, to find an ash content.

Although the present invention will be described in more detail with reference to examples, the present invention is not limited by the examples.

(Example 1)

Predetermined amounts of a melamine resin aqueous solution (Sumitec Resin M-3, a solid concentration of 80 % by weight, manufactured by Sumitomo Chemical Co., Ltd.) and polyvinyl alcohol (hereinafter abbreviated as PVA) having a polymerization degree of 1700 and a saponification degree of 99 % were measured per 100 parts by weight of phenol resin powder (Belpearl R800 : an average particle diameter of 20 μm, produced by Kanebo Ltd.), and predetermined amounts of potato starch, a surface active agent (Leodole SP-L10, produced by Kao Co., Ltd.) and water were weighed as additives.

The phenol resin powder and the potato starch were dry blended by a kneader for 15 minutes. On the other hand, the polyvinyl alcohol was dissolved in warm water to form a 15 % aqueous solution by weight. The polyvinyl alcohol aqueous solution, the melamine resin aqueous solution, the surface active agent, and water were added to the kneader, followed by blending for further 15 minutes.

A mixture composition obtained was then extruded by a biaxial extruding granulator (Pelleterdouble EXDF-100, manufactured by Fuji Paudal Co., Ltd.), to obtain pellet formed products having an outer diameter of approximately 1.0 mm and respectively having different binder contents from the mixture composition. The composition ratio of the above-mentioned raw materials were shown in Table 1:

(Table 1)

| | phenol resin | binder | | | additive | | | total solid content | total liquid content |
|---|---|---|---|---|---|---|---|---|---|
| | | melamine solid content | PVA solid content | total amount of binder | starch | surface active agent | total water content | | |
| composition ratio | 100 | 2 | 4 | 6 | 8 | 23 | 20 | 114 | 43 |

A specimen thus obtained was then carbonized after being raised to a temperature of 650°C at a temperature rising rate of 50°C/H under a nitrogen atmosphere using a cylindrical electric furnace having an inner diameter of 70 mm φ and maintained for one hour.

20 g of carbide thus obtained was then activated by steam under different conditions as shown in Table 2, to obtain seven samples. The activation treatment was carried out using nitrogen gas containing steam (activation gas composition molar ratio : $N_2/H_2O = 1/1$, flow rate : 1.0 NL/min) at 750°C for 1.5 hours for the sample 1, at 900°C for 1.5 hours for the sample 2, at 950°C for 1.5 hours for the sample 3, at 980°C for 1.5 hours for the sample 4, at 1000°C for 1.5 hours for the sample 5, at 1000°C for 2.0 hours for the sample 6, and at 700°C for 1.5 hours for the sample 7. The weight decrease rate in a case where the activation treatment was thus carried out and the properties such as the specific surface area in each of the obtained samples 1 to 7 were examined, and the results were together shown in Table 2.

(Table 2)

properties of activated carbon

| sample | activation temperature (°C) | activation time (hr) | weight decrease rate (%) | specific surface area (m²/g) | pore properties | | | | tensile strength (kg/cm²) | packing density (g/cc) | bulk density (g/cc) |
|---|---|---|---|---|---|---|---|---|---|---|---|
| | | | | | volume of pores having a diameter of 0.01~10 μm (cc/g) | volume of pores having a diameter of not more than 10nm (cc/g) | volume of pores having a diameter of 0.6~0.8nm (cc/g) | ratio of volume of pores having a diameter of 0.6~0.8nm (%) | | | |
| 1 | 750 | 1.5 | 22 | 856 | 0.286 | 0.368 | 0.339 | 92 | 56 | 0.68 | 0.93 |
| 2 | 900 | 1.5 | 31 | 1074 | 0.273 | 0.480 | 0.374 | 78 | 83 | 0.59 | 0.70 |
| 3 | 950 | 1.5 | 37 | 1248 | 0.350 | 0.605 | 0.472 | 78 | 45 | 0.56 | 0.58 |
| 4 | 980 | 1.5 | 41 | 1460 | 0.390 | 0.607 | 0.473 | 78 | 40 | 0.48 | 0.44 |
| 5 | 1000 | 1.5 | 47 | 1770 | 0.477 | 0.820 | 0.459 | 56 | 27 | 0.38 | 0.31 |
| 6 | 1000 | 2.0 | 64 | 2143 | 0.571 | 1.100 | 0.055 | 5 | 6 | 0.29 | 0.28 |
| 7 | 700 | 1.5 | 18 | 675 | 0.261 | 0.287 | 0.235 | 82 | 66 | 0.74 | 0.92 |

The samples 1 to 7 obtained in the above-mentioned manner and coconut shell activated carbon for gas adsorption (general activated carbon) generally used were used, to find the amount of adsorbed arsine and the amount of released arsine. With respect to the samples 1 and 2 and the general activated carbon, the ash content and the change in pressure after 20 days were examined, and the rate of internal pressure increase after 20 days was found by the following equation. The results were together shown in Table 3.

The rate of internal pressure increase after 20 days = (internal pressure after 20 days / initial internal pressure) $\times$ 100.

(Table 3)

| | ash content (%) | amount of adsorbed arsine (g) | amount of released arsine (g) | rate of internal pressure increase after 20 days |
|---|---|---|---|---|
| sample 1 | 0.6 | 33.1 | 19.4 | 100 |
| sample 2 | 0.5 | 36.0 | 21.8 | 100 |
| sample 3 | - | 35.6 | 21.5 | - |
| sample 4 | - | 35.7 | 21.4 | - |
| sample 5 | - | 28.4 | 17.8 | - |
| sample 6 | - | 27.7 | 13.3 | - |
| sample 7 | - | 25.5 | 16.4 | - |
| general activated carbon | 4.2 | 25.5 | 16.1 | 129 |

As a result, the samples 1 to 4 satisfying conditions, that is, a specific area of 700 to 1500 $m^2$/g, a pore volume of pores having a pore diameter of 0.01 to 10 µm being 0.1 to 1.0 cc/g, a pore volume of pores having a pore diameter of not more than 10 nm being 0.20 to 0.80 cc/g, the ratio of the pore volume of pores having a pore diameter of 0.6 to 0.8 nm to the pore volume of the pores having a pore diameter of not more than 10 nm being not less than 75 %, a bulk density of 0.4 to 1.1 g/cc, a packing density of 0.30 to 0.70 g/cc, and a tensile strength of not less than 30 kg/$cm^2$, were higher in the amount of adsorbed arsine and the amount of released arsine, as compared with the samples 5 to 7 which do not satisfy the above-mentioned conditions and the general activated carbon.

In the samples 1 and 2, the ash content was significantly lower than that of the general activated carbon. Even when they were allowed to stand for 20 days, the internal pressure was prevented from being raised as in a case where the general activated carbon was used.

(Example 2)

In the example 2, the sample 2 prepared in the above-mentioned example 1 was used. In a case where the sample 2 was not pre-treated and a case where the sample 2 was pre-treated upon being brought into contact with arsine or phosphine (hereinafter referred to as preliminary arsine or preliminary phosphine) in advance at various heating temperatures in the test container, arsine for storage or phosphine for storage was then injected into the test container, to conduct a comparative experiment for measuring the change in pressure in the test container and the change in purity of the arsine for storage or the phosphine for storage with the elapse of time.

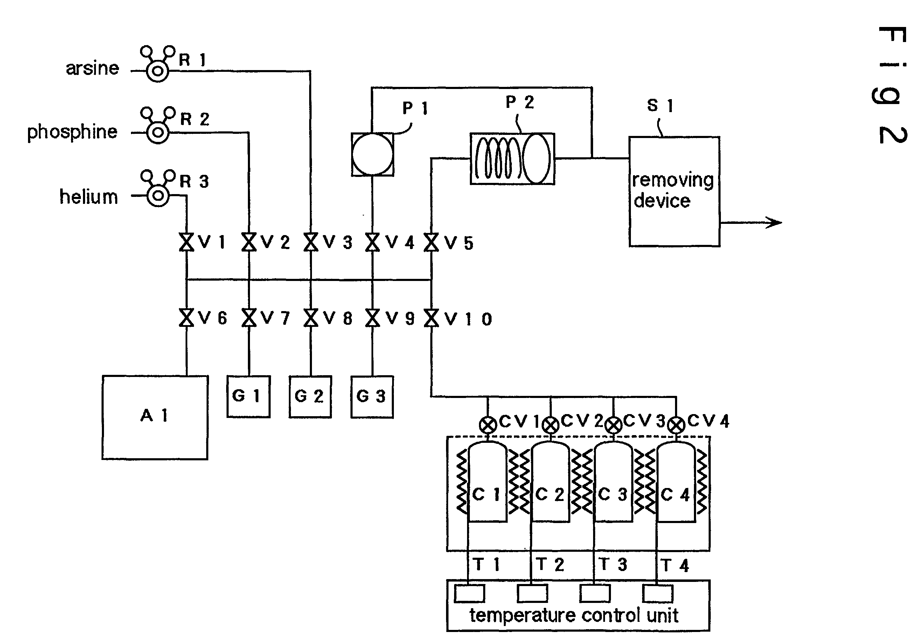

In the experiment, an experimental apparatus shown in Fig. 2 was used.

The experimental apparatus comprises a gas injection system, a gas expelling system, a gas analysis system, and a test container system. The systems are connected to one another via piping comprising normally closed cut-off valves V1 to V10. The gas injection system is independently connected to the test container system, respectively, from gas sources R1 to R3 of arsine, phosphine and helium via the cut-off valves V1 to V3. The gas expelling system is connected to S1 from the test container system via a vacuum pump P1 and a molecular turbo pump P2, so that extremely toxic arsine and phosphine can be removed to be safely expelled outward. The gas analysis system comprises an ordinary gas analyzer A1 using gas chromatography, a pressure gauge G1, a Pirani vacuum gauge G2, and an ionization vacuum gauge G3, which are respectively connected to test containers via the cut-off valves V6 to V10. The Pirani vacuum gauge G2 is used for measurement on the order of $10^{-1}$mmHg, and the ionization vacuum gauge G3 is used for measurement on the order of $10^{-5}$mmHg.

The above-mentioned test container system has four test containers C1 to C4 respectively comprising inlet and outlet cut-off valves CV1 to CV4 at their inlet and outlet ports, and has electric heater units for heating the test containers C1 to C4 from outside the test containers C1 to C4. The electric heater units respectively have temperature control units using thermocouple sensors T1 to T4. The sample 2 is packed into each of the test containers C1 to C4. A buffer space in which the sample 2 is not packed is provided at an upper part on the side of the inlet of each of the test containers C1 to C4.

It will be clarified that impurities are produced by a reaction between arsine or phosphine and the sample 2.

(1) Initial Vacuum Treatment Step

An initial vacuum treatment step was first carried out such that oxygen, nitrogen, water, etc. would be removed from the test container and the sample 2 which are exposed to air.

In the initial vacuum treatment step, the inlet and outlet cut-off valves CV1 to CV4 and the cut-off valve V4 are opened, and each of the test containers C1 to C4 is evacuated to a pressure of 0.1 mmHg with the vacuum pump P1 to expel air from the test container, and the cut-off valve V4 is then closed.

The cut-off valve V1 is then opened, to inject helium which is an inert gas into each of the test containers C1 to C4 from the gas source R3 until the pressure inside the test container is approximately atmospheric pressure, and the cut-off valve V1 is then closed. Thereafter, the cut-off valve V4 is opened again, to evacuate each of the test containers C1 to C4 to a pressure of approximately 0.1 mHg. Since helium is effective in accelerating the replacement of air in each of the test containers C1 to C4, the injection of the helium may be suitably repeated several times. It may be confirmed that oxygen, nitrogen, carbon monoxide and carbon dioxide which are impurities are not generated by opening the cut-off valve V1, injecting helium, then introducing helium gas into the analyzer A1 via the cut-off valve V6 to conduct an analysis. Although helium is adsorbed to the sample 2 by being injected, no impurities are generated by the adsorption of helium.

Each of the test containers C1 to C4 is then continuously evacuated while being heated to a predetermined temperature of 300°C to 350°C, respectively, by the electric heater units, to close the cut-off valve V4, while opening the cut-off valve V5 at the time point where the degree of vacuum is approximately 0.1 mmH. At this time, the test container is evacuated to a high pressure of not more than $10^{-5}$ mmHg by the molecular turbo pump P2. Finally, the inlet and outlet cut-off valves CV1 to CV4 and the cut-off valve V5 are closed, to terminate the initial vacuum treatment step. After each of the test containers C1 to C4 is allowed to stand until it is returned to an ordinary temperature, the weight W8 of the test container is weighed.

(2) Step of Injecting Preliminary Arsine or Preliminary Phosphine

While maintaining each of the test containers C1 to C4 at 20°C, opening the inlet and outlet cut-off valves CV1 to CV4 and the cut-off valve V2 or V3, and opening the cut-off valve V7, to measure the pressure inside the test container using the pressure gauge G1, preliminary arsine or preliminary phosphine is injected into the test container until the pressure inside thereof is approximately 20 mmHg. At this time, the temperatures inside the test containers C1, C2, C3, and C4 are maintained upon being respectively heated to 50°C, 100°C, 150°C, and 200°C using the temperature control units.

In order to measure impurities generated in each of the test containers C1 to C4 and the pressure inside thereof, the test container is suitably communicated to the analyzer A1 and the pressure gauge G1.

While heating each of the test containers C1 to C4 to maintain the temperature inside thereof at 200°C, the test container is evacuated to a pressure of $10^{-5}$ mmHg using the vacuum pump P1 and the molecular turbo pump P2, to expel the preliminary arsine or the preliminary phosphine containing impurities from the text container. At this time, the preliminary arsine or the preliminary phosphine containing impurities can be accumulated in the buffer space provided at the upper part of each of the test containers V1 to C4, so that it is smoothly expelled. After each of the test containers C1 to C4 is allowed to stand until it is returned to an ordinary temperature, the weight W9 of the test container is weighed.

(3) Step of Adsorbing Arsine for Storage or Phosphine for Storage

While maintaining each of the test containers C1 to C4 at 20°C, opening the cut-off valves CV1 to CV4 and the cut-off valve V2 or V3, and opening the cut-off valve V7, to measure the pressure inside the test container using the pressure gauge G1, arsine for storage or phosphine for storage is injected into the test container until the pressure inside thereof is approximately 400 mmHg, and is adsorbed to the sample 2 in the test container. After it is confirmed by the analyzer A1 that no impurities are generated in each of the test containers C1 to C4, the inlet and outlet cut-off valves CV1 to CV4 are closed, to measure the weight W10 of the test container, and calculate the weight of the gas (W10 - W9) stored in the test container.

(4) Results of Experiments

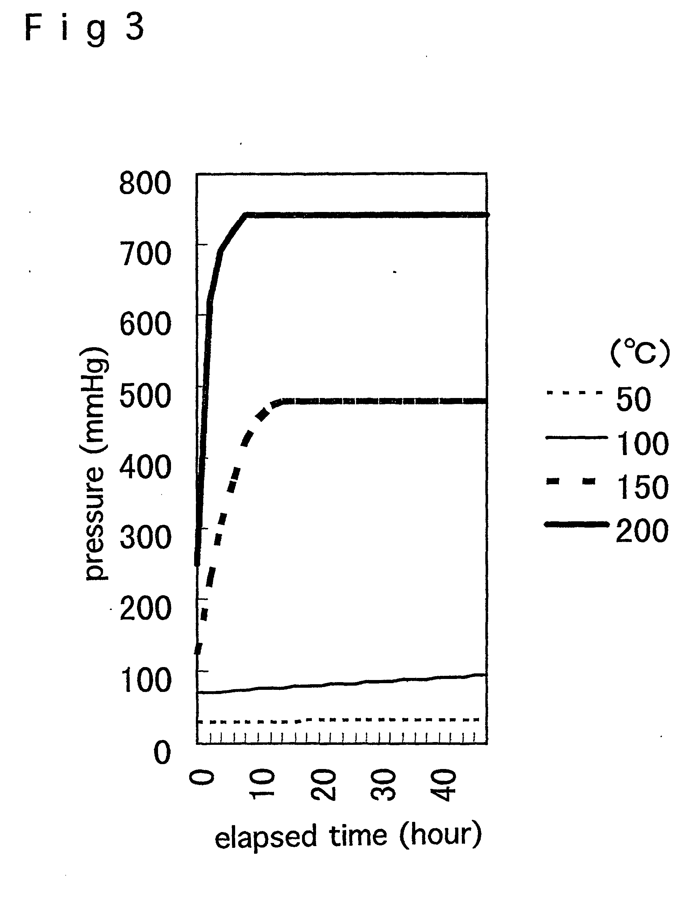

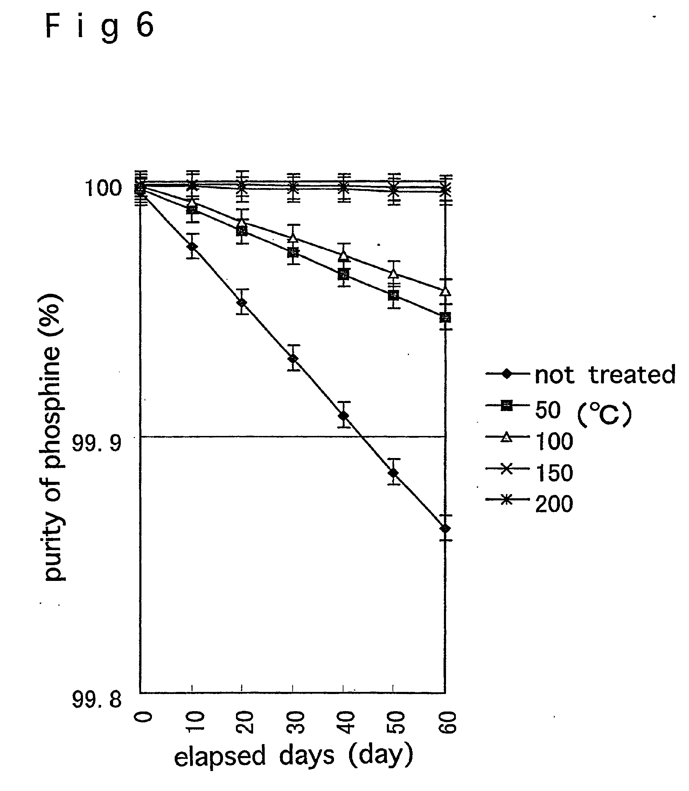

Figs. 3 to 5 show the results of experiments in a case where arsine is used, and Fig. 6 shows the results of experiments in a case where phosphine is used.

Fig. 3 is a graph showing the changes with time in the pressures inside the test containers C1 to C4 in a case where the test containers are respectively heated to temperatures of 50°C, 100°C, 150°C, and 200°C to pre-treat the activated carbon which is the sample 2 in the step of injecting the preliminary arsine or the preliminary phosphine described in the above-mentioned item (2).

As a result, in the test containers C1 and C2 which were respectively heated at temperatures of 50°C and 100°C, the pressures inside the test containers were gradually raised to approximately 33 mmHg and approximately 93 mmHg, respectively, in cases of 50°C and 100°C, after 48 hours from the start of heating treatment. It is expected that the pressures are further gradually raised with the elapse of time. Contrary to this, in the test containers C3 and C4 which were respectively heated at temperatures of 150°C and 200°C, the pressures were rapidly raised from the start of the treatment, and were hardly raised at approximately 480 mmHg and approximately 740 mmHg, respectively, after approximately 14 hours from the start of the treatment and approximately 8 hours from the start of the treatment. Therefore, it is presumed that the generation of the impurity gases is terminated after approximately 8 hours and approximately 14 hours, respectively, in the test container C4 which was heated at 200°C and the test container C3 which was heated at 150°C, while being still continued even after an elapse of 48 hours in the test containers C1 and C2 which were respectively heated at 50°C and 100°C.

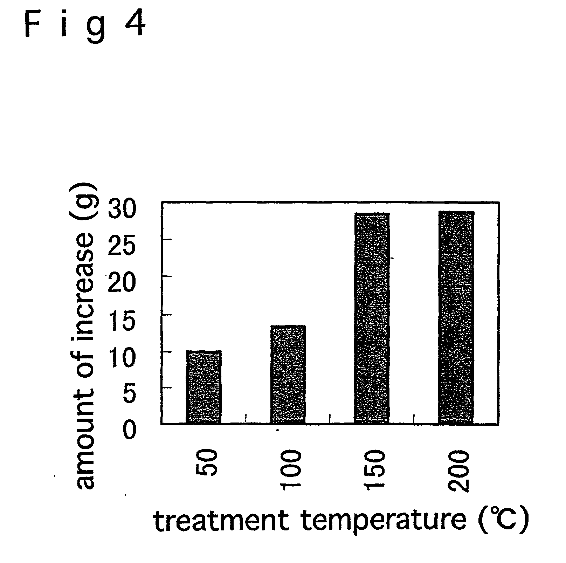

Fig. 4 is a bar graph showing the difference (W9 - W8) between the weight W9 of each of the test containers C1 to C4 in which the preliminary arsine was injected after an elapse of 48 hours in Fig. 3 and the weight W8 of the test container in which the preliminary arsine has not been injected. It is presumed that the difference is based on the fact that impurity atoms composed of oxygen, nitrogen and hydrogen bonded to the pore surface of the sample 2 and the preliminary arsine are subjected to a replacement reaction, so that the arsine increases in weight by being ineversibly bonded to the pore surface by chemical adsorption.

When the test container C1 which was heated at 50°C and the test container C2 which was heated at 100°C were compared with each other, the difference in the test container C2 which was heated at 100°C was larger by approximately 50 %, as compared with that in the test container C1 which was heated at 50°C. Contrary to this, the difference in the test container C3 which was heated at 150°C and the difference in the test container C4 which was heated at 200°C were approximately the same, and were approximately three times that in the test container C1 which was heated at 50°C. It is presumed that almost all of the impurity atoms on the pore surface of the sample 2 are replaced with arsine upon reacting with the preliminary arsine.

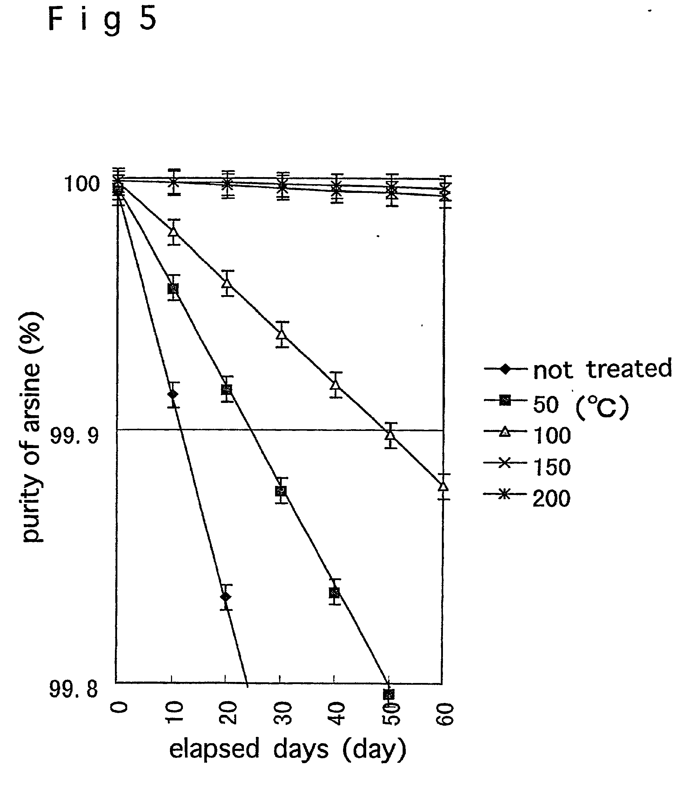

Fig. 5 is a graph showing the change in purity of the arsine for storage in a case where the arsine for storage is injected into each of the test containers C1 to C4 as shown in the step of adsorbing the arsine for storage or the phosphine for storage in the above-mentioned item (3) using the test container in which the sample 2 was not treated by the preliminary arsine in addition to the test containers in which the sample 2 was treated by the preliminary arsine in the above-mentioned manner. The arsine for storage was injected at a temperature of 20°C until the pressure inside each of the test containers C1 to C4 would be 400 mmHg, and was then allowed to stand at 35°C, to examine the change in purity of the arsine for storage. The purity of the arsine for storage was calculated by finding the total of the concentrations of impurities composed of hydrogen, oxygen, nitrogen, methane, carbon monoxide and carbon dioxide.

As a result, the purity of the arsine for storage was greatly decreased in the test container in which the sample 2 was not treated by the preliminary arsine and the test containers which were respectively heated at temperatures of 50°C and 100°C in treating the sample 2 by the preliminary arsine, and the purity of the preliminary arsine was below 99.9 % for about two weeks in the test container in which the sample 2 was not treated, for about four weeks in the test container which was heated at 50°C, and for about seven weeks in the test container which was heated at 100°C.

On the other hand, it is expected that the purity of the arsine for storage is hardly decreased in the test containers which were respectively heated at 150°C and 200°C in treating the sample 2 by the preliminary arsine, and the purity of the arsine for storage is not below 99.9 % until an elapse of one year since the arsine for storage was injected. If the preliminary arsine is heated at at least 150°C to pre-treat the activated carbon, therefore, impurities can be prevented from being included in the arsine for storage over a long time period, and the arsine for storage can be stored over a long time period without decreasing the purity thereof.

Fig. 6 is a diagram, which is the same as Fig. 5, in a case where arsine is replaced with phosphine, which indicates that although the rate of decrease in purity of phosphine for storage is slightly lower than that in the case of arsine, it is preferable that the phosphine for storage is heated to a temperature of 150°C to 200°C to treat activated carbon by preliminary phosphine in order to store the phosphine for storage for a long time period, as in the case of the arsine.

(Example 3)

In the example 3, activated carbon that is the sample 2 produced in the example 1 and general coconut shell activated carbon for gas adsorption were used, to measure the amounts of adsorbed arsine per liter of the activated

carbon under pressures at a temperature of 25°C. The results were shown in Table 4.

(Table 4)

| Amount of adsorbed arsine per litter of activated carbon at 25°C | | |
|---|---|---|
| arsine pressure (Torr) | amount of adsorbed arsine (g) | |
| | sample 2 | coconut shell activated arsine |
| 10 | 93 | 64 |
| 20 | 116 | 77 |
| 30 | 131 | 88 |
| 40 | 143 | 97 |
| 50 | 153 | 104 |
| 100 | 189 | 126 |
| 200 | 234 | 158 |
| 300 | 265 | 178 |
| 400 | 290 | 198 |
| 500 | 310 | 210 |
| 600 | 328 | 225 |
| 700 | 344 | 234 |

As a result, in the activated carbon that is the sample 2 satisfying the above-mentioned conditions, the amount of adsorbed arsine was much higher, as compared with that in the general coconut shell activated carbon for gas adsorption.

(Example 4)

The apparatus for gas storage shown in Fig. 1 was employed, to measure the weight W1 of a test container in a case where an adsorbent was packed into the test container in conformity with a method of measuring the amount of adsorbed arsine and the amount of released arsine in the item (1) in the above-mentioned embodiment, and then measure the weight W2 of the test container in a case where an arsine gas was injected thereinto under conditions of 700 mmHg while maintaining the temperature inside the test container at 20°C. The result of calculation of the amount of adsorbed arsine (= W2 - W1) was 260 g.

The test container in which the arsine gas was injected was evacuated to a pressure of 20 mmHg with a vacuum pump, as described above, to release the arsine gas outward from the test container. The weight W3 of the test container at this time was measured, to find the amount of released arsine (= W2 - W3) and the amount of remaining arsine (= W3 - W1). Further, the releasing ratio was found by the following equation from the amount of adsorbed arsine and the amount of released arsine.

Releasing ratio (%) = (amount of released arsine / amount of adsorbed arsine) X 100

In a case where the temperature of the test container in which the arsine gas was injected was set to 20°C, 35°C, 50°C, 100°C, and 150°C, to release the arsine gas from the test container, the amount of remaining arsine, the amount of released arsine, and the releasing ratio were found. The results were shown in Table 5.

(Table 5)

| heated temperature (°C) | amount of remaining arsine arsine (g) | amount of released (g) | releasing ratio (%) |
|---|---|---|---|
| 20 (not heated) | 105 | 155 | 59.6 |
| 35 | 90 | 170 | 65.4 |
| 50 | 79 | 181 | 69.6 |
| 100 | 57 | 203 | 78.1 |
| 150 | 46 | 214 | 82.3 |

As can be seen from the results, the amount of released arsine can be greatly increased by heating the test container in which the arsine gas was injected to a suitable temperature, thereby making it possible to efficiently utilize the stored arsine.

(Example 5)

In the example, phosphine was used, to measure the weight W1 of a test container in a case where an adsorbent was packed into the test container, and then measure the weight W2 of the test container in a case where a phosphine gas was injected thereinto under conditions of 700 mmHg while maintaining the temperature inside the test container at 20°C. The result of calculation of the amount of adsorbed phosphine (= W2 - W1) was 80 g.

The test container in which the phosphine gas was injected was evacuated to a pressure of 20 mmHg with a vacuum pump, as described above, to release the phosphine gas outward from the test container. The weight W3 of the test container at this time was measured, to find the amount of released phosphine (= W2 - W3) and the amount of remaining phosphine (= W3 - W1). Further, the releasing ratio was found by the following equation from the amount of adsorbed phosphine and the amount of released phosphine.

Releasing ratio (%) = (amount of released phosphine / amount of adsorbed phosphine) $\times$ 100

In a case where the temperature of the test container in which the phosphine gas was injected was set to 20°C, 35°C, 50°C, 100°C, and 150°C, to release the phosphine gas from the test container, the amount of remaining phosphine, the amount of released arsine, and the releasing ratio were found. The results were shown in Table 6.

(Table 6)

| heated temperature (°C) | amount of remaining phosphine (g) (g) | amount of released phosphine | releasing ratio (%) |
|---|---|---|---|
| 20 (not heated) | 24 | 56 | 70.0 |
| 35 | 19 | 61 | 76.3 |
| 50 | 16 | 64 | 80.0 |
| 100 | 11 | 69 | 86.3 |
| 150 | 8 | 72 | 90.0 |

As can be seen from the results, the amount of released phosphine can be greatly increased by heating the test container in which the phosphine gas was injected to a suitable temperature, thereby making it possible to efficiently utilize the stored phosphine.

Industrial Applicability

As described in detail above, according to the present invention, if a gaseous compound, such as arsine, phosphine, or boron trifluoride, used as an ion implantation gas in the semiconductor industry is stored upon being adsorbed to activated carbon at a pressure which is not more than atmospheric pressure, and is then evacuated to a negative pressure, one or more extremely toxic gases do not leak out to environmental circumstances at atmospheric pressure. Therefore, the gaseous compound can be utilized upon being easily desorbed.

When the gaseous compound, such as arsine, phosphine, or boron trifluoride, which is adsorbed to the activated carbon is utilized upon being desorbed, if the gaseous compound is heated, the amount of the desorbed gaseous compound is increased. Accordingly, the extremely toxic gases do not leak out to the environmental circumferences at atmospheric pressure, thereby making it possible to increase the ratio of the gaseous compound to be extracted.

Furthermore, when the activated carbon is treated by a series of steps comprising a step of adsorbing a gaseous hydrogenated compound or a gaseous halogenated compound upon bringing the gaseous compound into contact with the activated carbon in advance in a sealed space, a step of accelerating a reaction of a system passing through the adsorbing step, and a step of expelling the gaseous compound passing through the reaction accelerating step from the sealed space, one or more impurity gases are prevented from being generated by contact between the activated carbon and the stored gaseous compound, and the purity of the stored gaseous compound is prevented from being decreased. Accordingly, it is possible to feed the gaseous compound having a significantly high purity.

**Claims**

1. A method of storing and delivering a gaseous hydrogenated compound or a gaseous halogenated compound, which is **characterized in that** a gaseous hydrogenated compound or a gaseous halogenated compound in a predetermined amount is stored upon being adsorbed to high-purity activated carbon under a storage environment at a pressure which is not more than atmospheric pressure by being brought into contact with the activated carbon, and is evacuated to a negative pressure in order to desorb at least a part of said adsorbed gaseous compound and deliver the part to a work environment.

2. The method according to claim 1, wherein the storage environment is heated when at least a part of a particular gaseous hydrogenated compound or gaseous halogenated compound, which is adsorbed to said activated carbon, is desorbed and is delivered.

3. The method according to claim 1 or 2, wherein said activated carbon is composed of a phenol resin as a main raw material.

4. The method according to any one of claims 1 to 3, wherein said activated carbon is a granular carbon formed product obtained by bonding activated particles formed by carbonizing phenol resin powder, which has a specific surface area of 700 to 1500 m$^2$/g, has pores having a pore diameter of 0.01 to 10 $\mu$m, the pore volume of which is 0.1 to 1.0 cc/g, has pores having a pore diameter of not more than 10 nm, the pore volume of which is 0.20 to 0.80 cc/g, and containing not less than 75 % by volume pores having a power diameter of 0.6 to 0.8 nm, has a bulk density of 0.4 to 1.1 g/cc, has a packing density of 0.30 to 0.70 g/cc, has an ash content of not more than 1.0 %, and has a tensile strength of not less than 30 kg/cm$^2$.

5. A method of treating activated carbon by a series of steps comprising a step of adsorbing a gaseous hydrogenated compound or a gaseous halogenated compound upon bringing the gaseous compound into contact with activated carbon in advance in a sealed space, a step of accelerating a reaction of a system passing through the adsorbing step, and a step of expelling the gaseous compound passing through the reaction accelerating step from said sealed space, to prevent, when a gaseous hydrogenated compound or a gaseous halogenated compound of a type which is the same as or different from that of said gaseous compound is adsorbed to be stored, the purity of the stored gaseous compound from being decreased due to one or more impurity gases generated by contact between the activated carbon and the stored gaseous compound.

6. The method according to claim 5, wherein in the reaction accelerating step, the amount and/or the heating temperature of the gaseous hydrogenated compound or the gaseous halogenated compound which is packed into the sealed space are selected.

7. The method according to claim 5 or 6, wherein the amount and/or the heating temperature of the gaseous hydrogenated compound or the gaseous halogenated compound which is packed into the sealed space are selected such that the pressure inside the sealed space in the expelling step is not more than atmospheric pressure.

8. The method according to any one of claims 5 to 7, wherein a buffer space for smoothly expelling in said expelling step the impurity gases included in the gaseous hydrogenated compound or the gaseous halogenated compound by said reaction accelerating step is provided in the sealed space.

9. A method of storing and delivering a gaseous hydrogenated compound or a gaseous halogenated compound, which is **characterized in that** a gaseous hydrogenated compound or a gaseous halogenated compound in a predetermined amount is stored upon being adsorbed to activated carbon treated using the method according to any one of claims 5 to 8 by being brought into contact with the activated carbon under a storage environment at a pressure which is not more than atmospheric pressure, and is evacuated to a negative pressure in order to desorb at least a part of the adsorbed gaseous compound and deliver the part to a work environment.

10. The method according to claim 9, wherein the storage environment is heated when at least a part of the gaseous hydrogenated compound or the gaseous halogenated compound, which is adsorbed to said activated carbon, is desorbed and is delivered.

11. The method according to claim 9 or 10, wherein said activated carbon is composed of a phenol resin as a main raw material.

12. The method according to any one of claims 9 to 11, wherein said activated carbon is a granular carbon formed product obtained by bonding activated particles formed by carbonizing phenol resin powder, which has a specific surface area of 700 to 1500 m$^2$/g, has pores having a pore diameter of 0.01 to 10 μm, the pore volume of which is 0.1 to 1.0 cc/g, has pores having a pore diameter of not more than 10 nm, the pore volume of which is 0.20 to 0.80 cc/g, and containing not less than 75 % by volume pores having a power diameter of 0.6 to 0.8 nm, has a bulk density of 0.4 to 1.1 g/cc, has a packing density of 0.30 to 0.70 g/cc, has an ash content of not more than 1.0 %, and has a tensile strength of not less than 30 kg/cm$^2$.

13. An apparatus using the method according to any one of claims 5 to 8.

14. An apparatus for storing and delivering a gaseous hydrogenated compound or a gaseous halogenated compound, which is **characterized in that** a gaseous hydrogenated compound or a gaseous halogenated compound in a predetermined amount is stored upon being adsorbed to high-purity activated carbon under a storage environment at a pressure which is not more than atmospheric pressure by being brought into contact with the activated carbon, and is evacuated to a negative pressure in order to desorb at least a part of the adsorbed gaseous compound and deliver the part to a work environment.

15. The apparatus according to claim 14, wherein the storage environment is heated when at least a part of the gaseous hydrogenated compound or the gaseous halogenated compound, which is adsorbed to said activated carbon, is desorbed and is delivered.

16. The apparatus according to claim 14 or 15, wherein said activated carbon is composed of a phenol resin as a main raw material.

17. The apparatus according to any one of claims 14 to 16, wherein said activated carbon is a granular carbon formed product obtained by bonding activated particles formed by carbonizing phenol resin powder, which has a specific surface area of 700 to 1500 m$^2$/g, has pores having a pore diameter of 0.01 to 10 μm, the pore volume of which is 0.1 to 1.0 cc/g, has pores having a pore diameter of not more than 10 nm, the pore volume of which is 0.20 to 0.80 cc/g, and containing not less than 75 % by volume pores having a power diameter of 0.6 to 0.8 nm, has a bulk density of 0.4 to 1.1 g/cc, has a packing density of 0.30 to 0.70 g/cc, has an ash content of not more than 1.0 %, and has a tensile strength of not less than 30 kg/cm$^2$.

18. An apparatus for storing and delivering a gaseous hydrogenated compound or a gaseous halogenated compound, which is **characterized in that** a gaseous hydrogenated compound or a gaseous halogenated compound in a predetermined amount is stored upon being adsorbed to activated carbon treated using the method according to any one of claims 5 to 8 under a storage environment at a pressure which is not more than atmospheric pressure by being brought into contact with the activated carbon, and is evacuated to a negative pressure in order to desorb at least a part of the adsorbed gaseous compound and deliver the part to a work environment.

19. The apparatus according to claim 18, wherein the storage environment is heated when at least a part of the gaseous hydrogenated compound or the gaseous halogenated compound, which is adsorbed to said activated carbon, is desorbed and is delivered.

20. The apparatus according to claim 18 or 19, wherein said activated carbon is composed of a phenol resin as a main raw material.

21. The method according to any one of claims 18 to 20, wherein said activated carbon is a granular carbon formed product obtained by bonding activated particles formed by carbonizing phenol resin powder, which has a specific surface area of 700 to 1500 m$^2$/g, has pores having a pore diameter of 0.01 to 10 μm, the pore volume of which is 0.1 to 1.0 cc/g, has pores having a pore diameter of not more than 10 nm, the pore volume of which is 0.20 to 0.80 cc/g, and containing not less than 75 % by volume pores having a pore diameter of 0.6 to 0.8 nm, has a bulk density of 0.4 to 1.1 g/cc, has a packing density of 0.30 to 0.70 g/cc, has an ash content of not more than 1.0 %, and has a tensile strength of not less than 30 kg/cm$^2$.

**Amended claims in accordance with Rule 86(2) EPC.**

1. (Amended) A method of storing and delivering a gaseous hydrogenated compound or a gaseous halogenated compound, which is **characterized in that** activated carbon which is a granular carbon formed product obtained by bonding activated particles formed by carbonizing phenol resin powder, which has a specific surface area of 700 to 1500 m$^2$/g, has pores having a pore diameter of 0.01 to 10 $\mu$m, the pore volume of which is 0.1 to 1.0 cc/g, has pores having a pore diameter of not more than 10 nm, the pore volume of which is 0.20 to 0.80 cc/g, and containing not less than 75 % by volume pores having a power diameter of 0.6 to 0.8 nm, has a bulk density of 0.4 to 1.1 g/cc, has a packing density of 0.30 to 0.70 g/cc, has an ash content of not more than 1.0 %, and has a tensile strength of not less than 30 kg/cm$^2$ is used, a gaseous hydrogenated compound or a gaseous halogenated compound in a predetermined amount is stored upon being adsorbed to said activated carbon under a storage environment at a pressure which is not more than atmospheric pressure by being brought into contact with the activated carbon, and is evacuated to a negative pressure in order to desorb at least a part of said adsorbed gaseous compound and deliver the part to a work environment.

2. The method according to claim 1, wherein the storage environment is heated when at least a part of a particular gaseous hydrogenated compound or gaseous halogenated compound, which is adsorbed to said activated carbon, is desorbed and is delivered.

3. (Cancelled)

4. (Cancelled)

5. A method of treating activated carbon by a series of steps comprising a step of adsorbing a gaseous hydrogenated compound or a gaseous halogenated compound upon bringing the gaseous compound into contact with activated carbon in advance in a sealed space, a step of accelerating a reaction of a system passing through the adsorbing step, and a step of expelling the gaseous compound passing through the reaction accelerating step from said sealed space, to prevent, when a gaseous hydrogenated compound or a gaseous halogenated compound of a type which is the same as or different from that of said gaseous compound is adsorbed to be stored, the purity of the stored gaseous compound from being decreased due to one or more impurity gases generated by contact between the activated carbon and the stored gaseous compound.

6. The method according to claim 5, wherein in the reaction accelerating step, the amount and/or the heating temperature of the gaseous hydrogenated compound or the gaseous halogenated compound which is packed into the sealed space are selected.

7. The method according to claim 5 or 6, wherein the amount and/or the heating temperature of the gaseous hydrogenated compound or the gaseous halogenated compound which is packed into the sealed space are selected such that the pressure inside the sealed space in the expelling step is not more than atmospheric pressure.

8. The method according to any one of claims 5 to 7, wherein a buffer space for smoothly expelling in said expelling step the impurity gases included in the gaseous hydrogenated compound or the gaseous halogenated compound by said reaction accelerating step is provided in the sealed space.

9. A method of storing and delivering a gaseous hydrogenated compound or a gaseous halogenated compound, which is **characterized in that** a gaseous hydrogenated compound or a gaseous halogenated compound in a predetermined amount is stored upon being adsorbed to activated carbon treated using the method according to any one of claims 5 to 8 by being brought into contact with the activated carbon under a storage environment at a pressure which is not more than atmospheric pressure, and is evacuated to a negative pressure in order to desorb at least a part of the adsorbed gaseous compound and deliver the part to a work environment.

10. The method according to claim 9, wherein the storage environment is heated when at least a part of the gaseous hydrogenated compound or the gaseous halogenated compound, which is adsorbed to said activated carbon, is desorbed and is delivered.

11. The method according to claim 9 or 10, wherein said activated carbon is composed of a phenol resin as a main raw material.

12. The method according to any one of claims 9 to 11, wherein said activated carbon is a granular carbon formed product obtained by bonding activated particles formed by carbonizing phenol resin powder, which has a specific surface area of 700 to 1500 m$^2$/g, has pores having a pore diameter of 0.01 to 10 $\mu$m, the pore volume of which is 0.1 to 1.0 cc/g, has pores having a pore diameter of not more than 10 nm, the pore volume of which is 0.20 to 0.80 cc/g, and containing not less than 75 % by volume pores having a power diameter of 0.6 to 0.8 nm, has a bulk density of 0.4 to 1.1 g/cc, has a packing density of 0.30 to 0.70 g/cc, has an ash content of not more than 1.0 %, and has a tensile strength of not less than 30 kg/cm$^2$.

13. An apparatus using the method according to any one of claims 5 to 8.

14. (Amended) An apparatus for storing and delivering a gaseous hydrogenated compound or a gaseous halogenated compound, which is **characterized in that** activated carbon which is a granular carbon formed product obtained by bonding activated particles formed by carbonizing phenol resin powder, which has a specific surface area of 700 to 1500 m$^2$/g, has pores having a pore diameter of 0.01 to 10 μ m, the pore volume of which is 0.1 to 1.0 cc/g, has pores having a pore diameter of not more than 10 nm, the pore volume of which is 0.20 to 0.80 cc/g, and containing not less than 75 % by volume pores having a power diameter of 0.6 to 0.8 nm, has a bulk density of 0.4 to 1.1 g/cc, has a packing density of 0.30 to 0.70 g/cc, has an ash content of not more than 1.0 %, and has a tensile strength of not less than 30 kg/cm$^2$ is used, a gaseous hydrogenated compound or a gaseous halogenated compound in a predetermined amount is stored upon being adsorbed to said activated carbon under a storage environment at a pressure which is not more than atmospheric pressure by being brought into contact with the activated carbon, and is evacuated to a negative pressure in order to desorb at least a part of the adsorbed gaseous compound and deliver the part to a work environment.

15. The apparatus according to claim 14, wherein the storage environment is heated when at least a part of the gaseous hydrogenated compound or the gaseous halogenated compound, which is adsorbed to said activated carbon, is desorbed and is delivered.

16. (Cancelled)

17. (Cancelled)

18. An apparatus for storing and delivering a gaseous hydrogenated compound or a gaseous halogenated compound, which is **characterized in that** a gaseous hydrogenated compound or a gaseous halogenated compound in a predetermined amount is stored upon being adsorbed to activated carbon treated using the method according to any one of claims 5 to 8 under a storage environment at a pressure which is not more than atmospheric pressure by being brought into contact with the activated carbon, and is evacuated to a negative pressure in order to desorb at least a part of the adsorbed gaseous compound and deliver the part to a work environment.

19. The apparatus according to claim 18, wherein the storage environment is heated when at least a part of the gaseous hydrogenated compound or the gaseous halogenated compound, which is adsorbed to said activated carbon, is desorbed and is delivered.

20. The apparatus according to claim 18 or 19, wherein said activated carbon is composed of a phenol resin as a main raw material.

21. The method according to any one of claims 18 to 20, wherein said activated carbon is a granular carbon formed product obtained by bonding activated particles formed by carbonizing phenol resin powder, which has a specific surface area of 700 to 1500 m$^2$/g, has pores having a pore diameter of 0.01 to 10 μm, the pore volume of which is 0.1 to 1.0 cc/g, has pores having a pore diameter of not more than 10 nm, the pore volume of which is 0.20 to 0.80 cc/g, and containing not less than 75 % by volume pores having a pore diameter of 0.6 to 0.8 nm, has a bulk density of 0.4 to 1.1 g/cc, has a packing density of 0.30 to 0.70 g/cc, has an ash content of not more than 1.0 %, and has a tensile strength of not less than 30 kg/cm$^2$.

# Fig 1

# Fig 2

# F i g 3

# Ｆｉｇ４

Fig 5

# Fig 6

EP 1 134 023 A1

## INTERNATIONAL SEARCH REPORT

International application No.

PCT/JP98/03644

| A. CLASSIFICATION OF SUBJECT MATTER |
|---|
| Int.Cl⁶ B01J20/20, C01B31/08, F17C11/00 |
| According to International Patent Classification (IPC) or to both national classification and IPC |

| B. FIELDS SEARCHED |
|---|
| Minimum documentation searched (classification system followed by classification symbols) |
| Int.Cl⁶ B01J20/00-20/34, C01B31/08, F17C11/00 |

Documentation searched other than minimum documentation to the extent that such documents are included in the fields searched
Jitsuyo Shinan Koho 1926–1996 Toroku Jitsuyo Shinan Koho 1994–1998
Kokai Jitsuyo Shinan Koho 1971–1998 Jitsuyo Shinan Keisai Koho 1996–1998

Electronic data base consulted during the international search (name of data base and, where practicable, search terms used)

| C. DOCUMENTS CONSIDERED TO BE RELEVANT |
|---|

| Category* | Citation of document, with indication, where appropriate, of the relevant passages | Relevant to claim No. |
|---|---|---|
| Y | WO, 96/11739, A1 (ATMI ECOSYS CORPORATION),<br>25 April, 1996 (25. 04. 96),<br>Claims ; page 13, line 15 to page 17, line 6<br>& US, 5707424, A & US, 5704965, A<br>& US, 5704967, A & AU, 9734572, A<br>& EP, 854749, A & US, 5518528, A<br>& AU, 9538300, A & EP, 785817, A<br>& JP, 10-503268, A & KR, 97702745, A | 1-4, 14-17 |
| Y | JP, 8-224468, A (Kanebo, Ltd.),<br>3 September, 1996 (03. 09. 96),<br>Claims ; page 2, right column, line 45 to page 3, left<br>column, line 8 ; page 4, left column, line 31 to right<br>column, lines 17, 28 to page 5, left column, line 1 ;<br>Table 1 (Family: none) | 1-4, 14-17 |
| A | JP, 9-210295, A (Tokyo Gas Co., Ltd.),<br>12 August, 1997 (12. 08. 97),<br>Claims & CA, 2196381, A & US, 5787605, A | 1-21 |

| ☒ Further documents are listed in the continuation of Box C. | ☐ See patent family annex. |
|---|---|

* Special categories of cited documents:
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search<br>6 November, 1998 (06. 11. 98) | Date of mailing of the international search report<br>17 November, 1998 (17. 11. 98) |
|---|---|
| Name and mailing address of the ISA/<br>Japanese Patent Office | Authorized officer |
| Facsimile No. | Telephone No. |

Form PCT/ISA/210 (second sheet) (July 1992)

29

**EP 1 134 023 A1**

<table>
<tr><td colspan="2" align="center">INTERNATIONAL SEARCH REPORT</td><td>International application No.<br>PCT/JP98/03644</td></tr>
</table>

C (Continuation).　DOCUMENTS CONSIDERED TO BE RELEVANT

| Category* | Citation of document, with indication, where appropriate, of the relevant passages | Relevant to claim No. |
|---|---|---|
| A | JP, 9-110409, A (Kanebo, Ltd.),<br>28 April, 1997 (28. 04. 97),<br>Claims (Family: none) | 3, 4, 16, 17,<br>20, 21 |
| A | JP, 60-247073, A (Air Products and Chemicals, Inc.),<br>6 December, 1985 (06. 12. 85),<br>Claims & US, 4580404, A & EP, 154165, A | 1-21 |
| A | JP, 61-144495, A (K.K. Kashiwa Kagaku Kogyo),<br>2 July, 1986 (02. 07. 86),<br>Claims (Family: none) | 1-21 |

Form PCT/ISA/210 (continuation of second sheet) (July 1992)